**Europäisches Patentamt**

**European Patent Office**

**Office européen des brevets**

(19)

(11) Veröffentlichungsnummer: **0 164 057**
A2

# (12) EUROPÄISCHE PATENTANMELDUNG

(21) Anmeldenummer: **85106554.0**

(51) Int. Cl.⁴: **G 01 N 27/84**

(22) Anmeldetag: **29.05.85**

(30) Priorität: **08.06.84 DE 3421404**
    **25.06.84 DE 3423368**

(43) Veröffentlichungstag der Anmeldung: **11.12.85**
    **Patentblatt 85/50**

(84) Benannte Vertragsstaaten: **AT BE CH DE FR GB IT LI LU NL SE**

(71) Anmelder: **MECAPEC S.A., Oberseestrasse, CH-8716 Schmerikon/SG (CH)**

(72) Erfinder: **Meili, Ernst, Unterbühlenstrasse 19, CH-8610 Uster (CH)**
    Erfinder: **Rimmele, Karl, Rosengarten 621, CH-8716 Schmerikon (CH)**

(74) Vertreter: **Viel, Georg, Dipl.-Ing., Am Zimmerplatz 16, D-6606 Saarbrücken-Gersweiler (DE)**

(54) Verfahren und Vorrichtungen zur Feststellung von Oberflächenfehlern an stabförmigem, ferromagnetischem Gut.

(57) Es wird mit Hilfe des Streufluss-Magnetpulver-Verfahrens gearbeitet, wobei das Gut berührungsfrei magnetisiert, trockenes Magnetpulver aufgebracht und in einem einzigen Durchgang die Prüfung der gesamten Oberfläche des stabförmigen Guts erfolgt. Der Kern der Erfindung besteht darin, dass das magnetisierte stabförmige Gut sich um seine Längsachse drehend an einem Polster aus Magnetpulver anliegend vorbei gefördert wird. Verschiedene zweckmässige Vorrichtungen zum Durchführen des Verfahrens werden angegeben. Mit nur einer kompakten Prüfeinheit ist eine allseitige Oberflächenprüfung des stabförmigen Guts in einem Durchgang möglich, wodurch auf engem Raum geprüft, markiert, geputzt oder ggf. die Fehlstelle dauerhaft fixiert werden kann.

EP 0 164 057 A2

ACTORUM AG

MECAPEC S.A.
CH-8716 Schmerikon

- 1 -

BESCHREIBUNG

Verfahren und Vorrichtungen zur Feststellung
von Oberflächenfehlern an stabförmigem,
ferromagnetischem Gut

Die Erfindung betrifft ein Verfahren und Vorrichtungen
zur Ermittlung von Oberflächenfehlern an stabförmigem,
ferromagnetischem Gut mit Hilfe des Streufluß-Magnetpulver-Verfahrens, wobei das Gut berührungsfrei magnetisiert, trockenes Magnetpulver aufgebracht und in einem
einzigen Durchgang die Prüfung der gesamten Oberfläche
des stabförmigen Guts erfolgt.

Verfahren und Vorrichtungen dieser Art sind vor allem für
Stahlwerke und Stahl verarbeitende Betriebe von großem
Interesse, um Halbzeug vor der Weiterverarbeitung auf
Oberflächenfehler zu prüfen und diese zu beseitigen bzw.
bei groben Fehlern damit behaftete Teile aus dem Produktionsprozeß auszusortieren.

Für diese Zwecke hat sich das Streufluß-Magnetpulver-Verfahren bewährt, das in verschiedenen Abwandlungen bekannt ist. Bei allen mit Magnetpulver arbeitenden Verfahren besteht eine besondere Problematik in der Aufbringung des Magnetpulvers auf das magnetisierte Gut.

So ist eine Vorrichtung zum zerstörungsfreien Prüfen im kontinuierlichen Durchlauf bekannt (DE-OS 21 16 827), bei der eine Magnetpulver-Emulsion auf das zu prüfende Halbzeug gegeben wird. Das Arbeiten mit einer solchen Flüssigkeit bringt Schwierigkeiten mit sich, sowohl hinsichtlich des Prüfens selbst als auch bei der Weiterverarbeitung geprüften Halbzeugs. Auch ist diese Vorrichtung nicht für das Prüfen bei höheren Temperaturen geeignet. Weiterhin ist die bekannte Vorrichtung verhältnismäßig aufwendig, weil zum vollständigen Prüfen der Oberfläche in einem einzigen Durchlauf mindestens zwei Prüfstationen erforderlich sind.

Eine Durchlaufprüfung ist auch mit einem anderen bekannten Verfahren bzw. Vorrichtung möglich, bei der die Vorteile des Trocken-Magnetpulver-Verfahrens genutzt werden (EU-Patentanmeldung 0 090 190). Der apparative Aufwand ist auch in diesem Fall noch relativ groß.

Der Erfindung liegt die Aufgabe zugrunde, ein Verfahren und eine Durchlaufprüfanlage der eingangs angegebenen Art zu schaffen, die die aufgezeigten Nachteile bekannter Einrichtungen vermeidet.

Diese Aufgabe wird erfindungsgemäß dadurch gelöst, daß das magnetisierte stabförmige Gut sich um seine Längsachse drehend an einem Polster aus Magnetpulver anliegend vorbei gefördert wird.

Sollen die markierten Oberflächenfehler nicht unmittelbar nach der Markierung beseitigt werden, so wird im Bereich des Polsters aus Magnetpulver die markierte Stelle dauerhaft fixiert oder markiert.

Eine zweckmäßige Vorrichtung zum Durchführen des Verfahrens besteht darin, daß die Schenkel eines Magnets so angeordnet sind, daß sich der in dem stabförmigen Gut entstehende magnetische Fluß im wesentlichen im unteren Bereich des stabförmigen Guts ausbildet.

Nach einer Weiterbildung dieser Vorrichtung ist die Breite der Schenkel größer als der Vorschub des stabförmigen Guts.

Um sowohl Längs- als auch Querrisse erkennen zu können, ist vorgesehen, daß im Bereich des Schenkels des Magnets, in dessen Umngebung sich ein Polster aus Magnetpulver bildet, ein zweiter eine Längsmagnetisierung in dem stabförmigen Gut bewirkender Magnet angeordnet ist.

Diese beiden Magnete sind zweckmäßigerweise mit um 90° phasenverschobenen Strömen erregt.

Ein magnetischer Kurzschluß zwischen den Schenkeln des Magnets kann vermieden werden, wenn zwischen den Schenkeln unmagnetisches Füllmaterial angeordnet ist.

Eine Vorrichtung zum Durchführen des neuen Verfahrens besteht darin, daß das Trocken-Magnetpulver über ein oder mehrere Rohre pneumatisch von unten in Richtung der Schenkel eines Magnets und des stabförmigen Guts förderbar ist.

Es ist erfindungsgemäß auch möglich, daß das Trocken-Magnetpulver mit Hilfe einer Förderwalze oder einer anderen Dosiereinrichtung in Richtung des Schenkels des Magnets förderbar ist, der gegenüber dem anderen Schenkel mit dem sich ausbildenden Polster aus Magnetpulver angeordnet ist.

Die mit der Erfindung erzielten Vorteile bestehen insbesondere darin, daß mit nur einer Prüfeinheit eine allseitige Oberflächenprüfung des stabförmigen Guts in einem Durchgang möglich ist. Durch die Verwendung nur einer Prüfeinheit ist eine räumlich gedrängte und kostengünstige Bauweise möglich. Außerdem ist es möglich, in einem räumlich eng begrenzten Bereich die gesamte Oberfläche zu prüfen, zu markieren, zu putzen oder ggf. die Fehlstelle dauerhaft zu fixieren.

Die Erfindung wird anhand der Zeichnungen näher beschrieben.

Es zeigen

Fig. 1    schematisch den Ablauf des Verfahrens,

Fig. 2    und

Fig. 3    die Ausbildung eines Magnetfeldes,

Fig. 4    und

Fig. 5    die Entstehung des Polsters aus Magnetpulver,

Fig. 6    eine Variante der Magnetpulver-Zufuhr,

Fig. 7    ein geschlossenes System für den Magnetpulver-Kreislauf,

Fig. 8    und

Fig. 9    eine Vorrichtung mit einem zweiten Magnet,

Fig. 10   eine besondere Ausbildung eines Magnets,

Fig. 11   und

Fig. 12   eine Vorrichtung zum Durchführen des Verfahrens in zwei Ansichten.

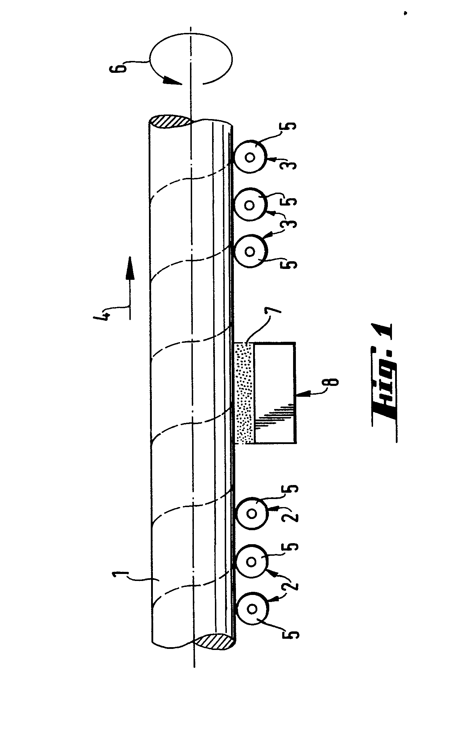

Die ferromagnetische Stange 1 in Fig. 1 wird mit Hilfe eines Einlaufrollgangs 2 und eines Auslaufrollgangs 3 in Richtung des Pfeiles 4 transportiert. Die Rollen 5 der beiden Rollgänge 2 und 3 sind so angeordnet, daß die Stange 1 - dasselbe gilt für einen Vier- oder sonstigen Mehrkantknüppel - sich beim Längstransport in Richtung des Pfeiles 4 gleichzeitig um ihre Längsachse dreht, wie das mit dem Pfeil 6 angedeutet ist. Dadurch bewegt sich die Stange 1 sozusagen wendelförmig an dem Polster 7 aus Trocken-Magnetpulver anliegend vorbei. Auf diese Weise werden Oberflächenfehler bei der Stange 1, die durch einen Magnet 8 magnetisiert wird, markiert und können entfernt oder vorab nur dauerhaft fixiert oder mit Farbe markiert (nicht dargestellt) werden, um in einem weiteren Arbeitsgang entfernt zu werden.

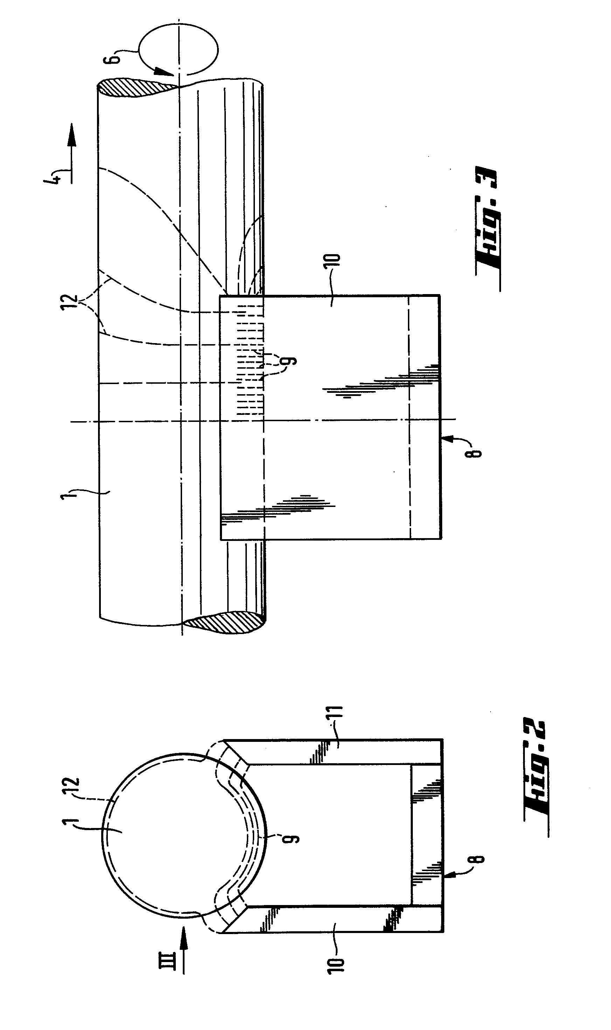

Fig. 2 und 3 zeigen einen Magnet 8, einen Jochmagnet, mit einer Stange 1 in zwei Ansichten. Anhand dieser beiden Figuren soll schematisch gezeigt werden, wie sich der magnetische Fluß in der Stange 1 im wesentlichen radial infolge der Magnetisierung ausbildet. - Die Magnetspulen auf den senkrecht angeordneten Schenkeln des Magnets 8 sind der besseren Übersichtlichkeit wegen nicht dargestellt.

Der wesentliche Teil des erzeugten magnetischen Flusses, der Hauptfluß 9, entsteht bei der Anordnung gemäß Fig. 2 und 3 auf dem kürzesten Weg zwischen den beiden Schenkeln 10 und 11 des Jochmagnets 8, d.h. im unteren Bereich der Stange 1. Der Nebenfluß 12 im oberen Bereich der Stange 1 ist wesentlich geringer. Er genügt aber vollkommen, um allfällige Pulvermarkierungen zuverlässig vor dem Abfallen zu schützen, wenn sich diese aus dem Bereich des Polsters 7 herausbewegen. - Der Einfachheit halber ist in Fig. 3 nur eine Seite des Magnetfeldes angedeutet; die linke Seite ist entsprechend ausgebildet.

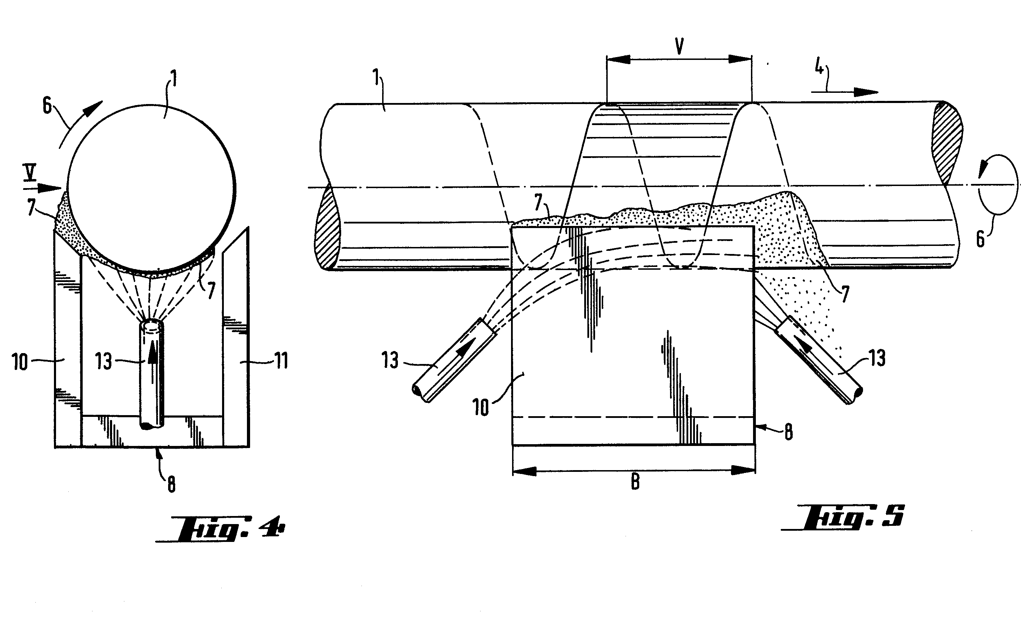

Sorgt man dafür, daß, wie beschrieben, der magnetische Hauptfluß 9 sich im unteren Bereich der Stange 1 ausbildet, dreht die Stange, wie das Fig. 4 zeigt, in Richtung des Pfeiles 6 und gibt z.B. pneumatisch von unten über Rohre 13 Trocken-Magnetpulver auf, so bildet sich, bedingt durch das Magnetfeld und die Drehung der Stange 1, ein Polster 7 aus Magnetpulver. In Längsrichtung hat das Polster 7 eine aus Fig. 5 ersichtliche Form, weil in dieser Ansicht die Längsbewegung der Stange 1 in Richtung des Pfeiles 4 zum Tragen kommt.

An diesem ruhenden Polster 7 aus trockenem Magnetpulver liegt die durch den Magnet 8 magnetisierte Stange 1 während der Drehung (Pfeil 6) und des Längstransports (Pfeil 4) an. Weist die Oberfläche der Stange 1 einen Oberflächenfehler auf, so entsteht durch die bekannte Wirkung des Streuflusses an der Fehlerstelle eine Pulverraupe. Der so gekennzeichnete Oberflächenfehler kann unmittelbar nach der Markierung durch die Pulverraupe, z.B. auf der oberen Seite der Stange 1 mit einer bekannten Methode entfernt werden, oder die entstandene Pulverraupe wird auf bekannte Weise fixiert oder mit Farbe markiert, damit der Oberflächenfehler später lokalisiert und beseitigt werden kann.

Die Breite B der Schenkel 10 und 11 des Magnets 8 (Fig. 5) wird so gewählt, daß sie größer ist als die Längsbewegung V der Stange 1 pro Zeiteinheit (Vorschub) in Richtung des Pfeiles 4. Dadurch ist einerseits gewährleistet, daß die gesamte Oberfläche der sich um ihre Längsachse drehenden und in Richtung des Pfeiles 4 transportierten Stange 1 an dem Polster 7 aus Magnetpulver entlanggleitet und damit alle Oberflächenfehler markiert werden können. Andererseits wird dadurch der die Haltekraft erzeugende magnetische Fluß 12 so lange aufrechterhalten, als eine Weiterbewegung der Pulvermarkierungen gewünscht ist, um diese zu bewerten oder die Fehler zu entfernen.

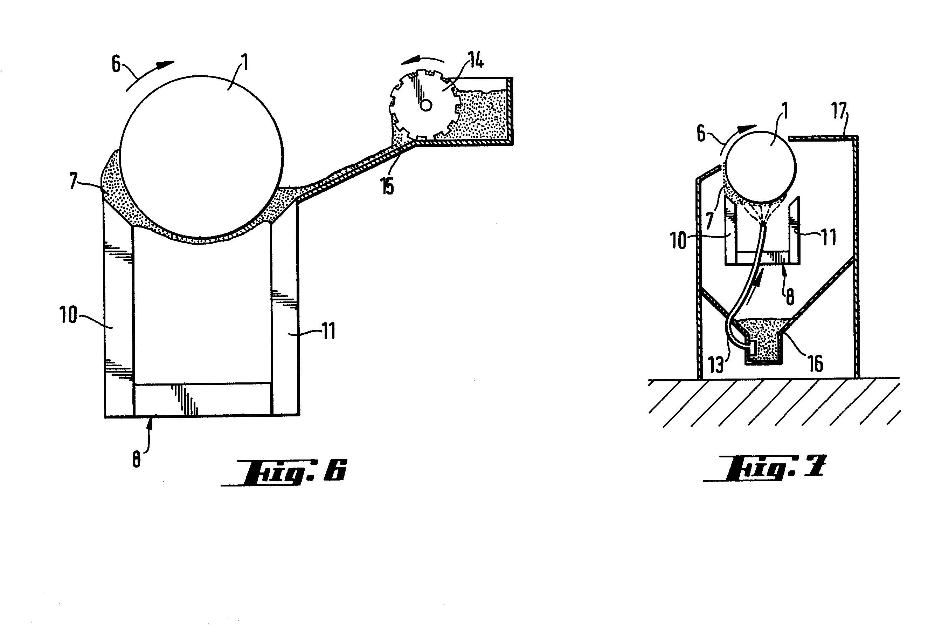

In Fig. 6 ist eine andere Art der Zuführung von Trocken-Magnetpulver zur Bildung des Polsters 7 gezeigt: eine Förderwalze 14, die etwa die gleiche Breite B wie die Schenkel 10 und 11 des Jochmagnets 8 aufweist, fördert Trocken-Magnetpulver über z.B. ein Blech 15 in Richtung des rechten Schenkels 11 des Magneten 8. Von dort wird das Magnetpulver infolge der Haltekraft des tangentialen Magnetfeldes in der Stange 1 zum anderen Polschenkel 10 befördert, und es bildet sich das Polster 7.

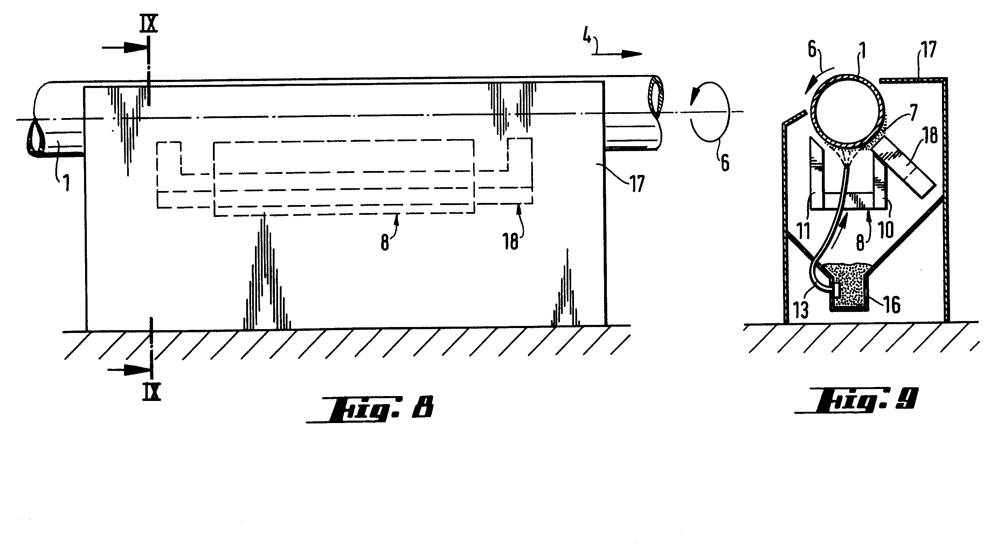

In Fig. 7 ist schematisch dargestellt, wie ein geschlossenes System für das Trocken-Magnetpulver realisiert werden kann. Das Magnetpulver wird pneumatisch über ein Rohr 13 zwischen die Schenkel 10 und 11 des Magneten 8 gegen die Stange gefördert. Das während des Prüfvorganges abfallende Pulver gelangt in den Trichter 16 zurück. Das an dem Magnet 8 haftende Magnetpulver fällt ebenfalls in den Trichter 16, wenn die Magnetisierung am Ende der Prüfung ausgeschaltet wird. Eine Umkleidung 17 verhindert den Austritt von Magnetpulver und die Verschmutzung desselben.

Die in den Fig. 2 bis 7 gezeigten Jochmagneten 8 bewirken im wesentlichen eine Quermagnetisierung des Stabes 1, wodurch Längsfehler in der Oberfläche dieses Stabes festgestellt werden können.

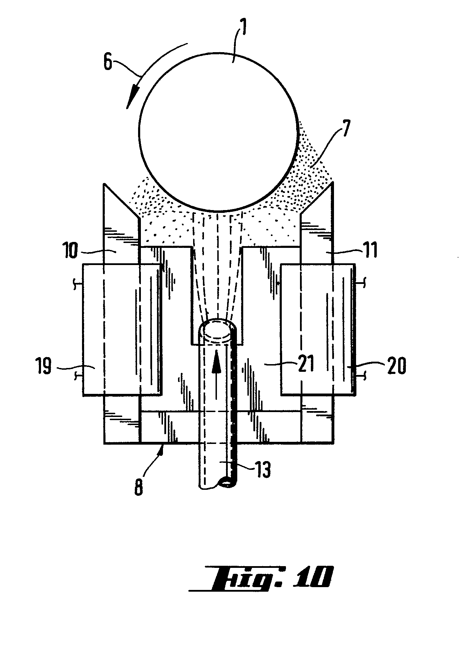

Soll die Oberfläche des Stabes oder Rohres 1 auch auf Querfehler geprüft werden, so ist ein zweiter Jochmagnet 18 vorzusehen, wie in den zwei Ansichten in Fig. 8 und 9 gezeigt ist. Der zweite Jochmagnet 18 ist im Bereich des Schenkels von Magnet 8 angeordnet, in dessen Bereich sich das Polster 7 aus Trocken-Magnetpulver bildet. Auf diese Weise erfolgt die zum Erkennen von Querrissen notwendige Längsmagnetisierung im wesentlichen im Bereich des Schenkels 10 von Magnet 8 in Fig. 8 und 9.

Die Ströme in den (nicht gezeichneten) Magnetspulen können um 90° phasenverschoben sein, um Risse in der Oberfläche von Stab bzw. Rohr 1 richtungsunabhängig markieren zu können.

Die Umkleidung 17 läßt in diesem Bereich den Prüfling 1 frei, um markierte Fehlstellen gleich nach der Markierung beseitigen oder die Pulverraupen fixieren zu können. Anstatt die Pulverraupen zu fixieren, kann auch ein Farbmarkieren erfolgen.

In Fig. 10 ist ein Jochmagnet 8 dargestellt, der zwischen den Schenkeln 10 und 11 unmagnetisches Füllmaterial 21 aufweist. Mit dieser Maßnahme werden magnetische Kurzschlüsse zwischen den die Erregerspulen 19 und 20 tragenden Schenkeln 10 und 11 vermieden, indem der Aufbau von Pulverbrücken verhindert wird.

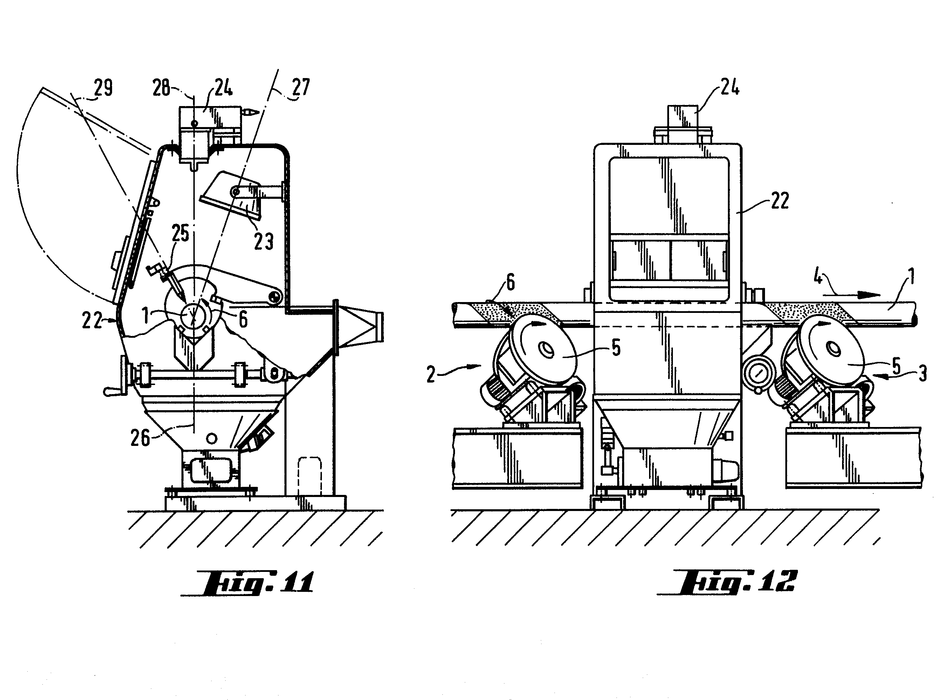

In den Fig. 11 und 12 ist eine Vorrichtung zum Durchführen des erfindungsgemäßen Verfahrens etwas detaillierter dargestellt. Die Rollgänge 2 und 3 mit den Rollen 5 transportieren das stabförmige Gut 1, sich um seine Längsachse drehend, durch die Prüfeinheit 22. Die Rollen 5 der Rollgänge 2 und 3, von denen hier der besseren Übersichtlichkeit halber nur je eine Rolle 5 dargestellt ist, können auch als "Wenderollen" bezeichnet werden, weil sie das stabförmige Gut 1 in Längsrichtung (Pfeil 4) bewegen und dabei um seine Längsachse drehen bzw. wenden (Pfeil 6). Dazu sind die Rollen 5 in den Rollgängen 2 und 3 zu dem stabförmigen Gut 1 geneigt angeordnet, wie das Fig. 12 zeigt.

Die mit dem stabförmigen Gut 1 in Berührung kommende Oberfläche der Rollen 5 ist zweckmäßigerweise elastisch ausgebildet, damit problemlos Stäbe 1 jeden Querschnitts (rund, vierkant usw.) transportiert werden können. Dabei ergibt sich auch ein geräuscharmer Transport. Die Oberfläche der Rollen 5 kann z.B. aus Hartgummi oder aus elastischem Kunststoff bestehen. Es ist auch denkbar, die Rollen 5 der Rollgänge 2 und 3 als mit Luft oder einem sonstigen Gas gefüllte Reifen auszubilden.

Im unteren Teil der Prüfeinheit 22 befindet sich (hier nicht näher dargestellt) der oder die Magnete 8 bzw. 18 mit dem Polster 7 aus Magnetpulver, wie beschrieben. Mit 23 ist eine Lichtquelle bezeichnet, um die mit Magnetpulver markierten Oberflächenfehler auf dem Gut 1 optimal erkennen zu können, was visuell oder optoelektronisch, z.B. mit Hilfe einer Kamera 24, erfolgen kann. Von Hand oder von dieser Kamera 24 kann ein Putzgerät 25 gesteuert werden, um unmittelbar nach dem Markieren von Oberflächenfehlern letztere zu beseitigen, was durch ein geeignetes spanabhebendes Verfahren geschehen kann.

Anstatt des Putzgerätes 25 kann an gleicher Stelle ein Signiergerät angeordnet sein, um die Pulverraupe zu fixieren oder die Stelle mit dem Oberflächenfehler in sonstiger Weise dauerhaft zu markieren, z.B. durch Farbspritzen. Diese Arbeitsweise ist dann angebracht, wenn Oberflächenfehler erst später, außerhalb der Prüfeinheit beseitigt werden sollen.

Im Gegensatz zu bekannten Prüfeinrichtungen mit mindestens zwei entlang des stabförmigen Guts 1 angeordneten Prüfeinheiten ist im vorliegenden Fall nur eine Prüfeinheit 22 vorhanden. In dieser räumlich verhältnismäßig kleinen Prüfeinheit 22 können in verschiedenen Ebenen alle erforderlichen Operationen durchgeführt werden:
- in der Ebene 26 erfolgt das Magnetisieren des Stabes 1 und das Markieren von Oberflächenfehlern an dem (nicht gezeichneten) Polster 7,
- in der Ebene 27 wird die Oberfläche des Stabes 1 beleuchtet,
- in der Ebene 28 wird entweder visuell oder durch eine Kamera 24 der markierte Oberflächenfehler erkannt und
- in der Ebene 29 wird der Oberflächenfehler manuell oder von der Kamera 24 gesteuert automatisch spanabhebend beseitigt.

In der gleichen Ebene 29 kann - wie gesagt - an Stelle der Fehlerbeseitigung durch eine Person oder, ebenfalls von der Kamera gesteuert, automatisch eine Fixierung der Pulverraupe oder sonstige dauerhafte Markierung (Farbspritzen) des mit Magnetpulver gekennzeichneten Oberflächenfehlers erfolgen.

Durch das Magnetisieren, mit Magnetpulver durch das ruhende Polster Markieren von Fehlern, Erkennen des Fehlers und dessen Beseitigung bzw. Fixierung in einer kompakten Prüfeinheit 22 ergeben sich stets gleichbleibende Bedingungen für alle zu prüfenden Oberflächenabschnitte. Der Prüfvorgang wird dadurch vereinfacht und es ergeben sich gute, reproduzierbare Prüfverhältnisse.

Im wesentlichen werden diese Vorteile dadurch erreicht, daß das Trocken-Magnetpulver ohne schädliche Bewegungsenergie auf den Prüfling aufgebracht wird. Bei bekannten Bepulverungsverfahren ist es schwierig, eine hohe und gleichbleibende Prüfempfindlichkeit über den ganzen Umfang des Prüflings zu erhalten, weil einerseits das Magnetpulver mit Bewegungsenergie behaftet aufgebracht und andererseits der Aufprallwinkel des Magnetpulvers nicht immer gleich ist; letzterer ändert sich mit Lage und Form des Prüflings.

Das Verfahren bzw. die Vorrichtungen sind für die Kalt- und Warmprüfung von stabförmigem Gut einsetzbar.

Im Vergleich zu bekannten Anlagen ist die Menge umlaufenden Magnetpulvers wesentlich geringer, wodurch sich eine geringe Staubentwicklung und Verschmutzung der Anlage ergibt.

Ein weitere Vorteil besteht darin, daß die Stabenden bis über die Stirnflächen geprüft werden.

Werden Oberflächenfehler nicht unmittelbar in der Prüfeinheit 22 beseitigt, sondern die Fehlerstelle z.B. farbmarkiert, so geschieht das mit großer Genauigkeit, weil es unmittelbar nach der Fehlerlesung (in der Ebene 29) erfolgt.

Kurze Stangen 1 können geprüft werden, indem sie in der Prüfeinheit 22 ohne Vorschub gedreht werden.

Mit dem Verfahren nach der Erfindung ist eine wesentliche Reduzierung des Prüfaufwandes bei hoher Fehlerempfindlichkeit und großer Durchsatzleistung bei wirtschaftlicher Betriebsweise möglich.

MECAPEC S.A.
CH-8716 Schmerikon

0 164 057

- 1 -

PATENTANSPRÜCHE

1. Verfahren zur Ermittlung von Oberflächenfehlern an stabförmigem, ferromagnetischem Gut mit Hilfe des Streufluß-Magnetpulver-Verfahrens, wobei das Gut berührungsfrei magnetisiert, trockenes Magnetpulver aufgebracht und in einem einzigen Durchgang die Prüfung der gesamten Oberfläche des stabförmigen Guts erfolgt, dadurch gekennzeichnet, daß das magnetisierte stabförmige Gut sich um seine Längsachse drehend an einem Polster aus Magnetpulver anliegend vorbei gefördert wird.

2. Verfahren nach Anspruch 1, dadurch gekennzeichnet, daß im Bereich des Polsters aus Magnetpulver die markierte Fehlstelle dauerhaft fixiert oder mit Farbe markiert wird.

3. Vorrichtung zum Durchführen des Verfahrens nach Anspruch 1, dadurch gekennzeichnet, daß die Schenkel (10, 11) eines Magnets (8) so angeordnet sind, daß sich der in dem stabförmigen Gut (1) entstehende magnetische Fluß im wesentlichen im unteren Bereich des stabförmigen Guts (1) ausbildet.

- 2 -

4. Vorrichtung nach Anspruch 3, dadurch **gekennzeichnet,** daß die Breite (B) der Schenkel (10, 11) größer als der Vorschub des stabförmigen Guts (1) ist.

5. Vorrichtung nach Anspruch 3 oder 4, dadurch **gekenn-** zeichnet, daß im Bereich des Schenkels (10) des Magnets (8), in dessen Umgebung sich ein Polster (7) aus Magnetpulver bildet, ein zweiter eine Längsmagnetisierung in dem stabförmigen Gut (1) bewirkender Magnet (18) angeordnet ist.

6. Vorrichtung nach Anspruch 5, dadurch **gekennzeichnet,** daß die Magnete (8, 18) mit um 90° phasenverschobenen Strömen erregt sind.

7. Vorrichtung nach Anspruch 3, dadurch **gekennzeichnet,** daß zwischen den Schenkeln (10, 11) des Magnets (8) unmagnetisches Füllmaterial (21) angeordnet ist.

8. Vorrichtung zum Durchführen des Verfahrens nach Anspruch 1, dadurch gekennzeichnet, daß das Trocken-Magnetpulver über ein oder mehrere Rohre (13) pneumatisch von unten in Richtung der Schenkel (10, 11) eines Magnets (8) und des stabförmigen Guts (1) förderbar ist.

9. Vorrichtung zum Durchführen des Verfahrens nach Anspruch 1, dadurch **gekennzeichnet,** daß das Trocken-Magnetpulver mit Hilfe einer Förderwalze (14) in Richtung des Schenkels (11) des Magnets (8) förderbar ist, der gegenüber dem anderen Schenkel (10) mit dem sich ausbildenden Polster (7) aus Magnetpulver angeordnet ist.

10. Vorrichtung zum Durchführen des Verfahrens nach einem oder mehreren der vorhergehenden Ansprüche, dadurch gekennzeichnet, daß das stabförmige Gut (1) mit Hilfe von Rollgängen (2, 3) sich wendelförmig bewegend transportierbar ist, deren Rollen (5) zu dem stabförmigen Gut (1) geneigt angeordnet sind und eine elastische Oberfläche aufweisen.

11. Vorrichtung nach Anspruch 10, dadurch gekennzeichnet, daß die Oberfläche der Rollen (5) aus Hartgummi ist.

12. Vorrichtung nach Anspruch 10, dadurch gekennzeichnet, daß die Oberfläche der Rollen (5) aus elastischem Kunststoff ist.

13. Vorrichtung nach Anspruch 10, dadurch gekennzeichnet, daß die Rollen (5) als mit Luft oder einem sonstigen Gas gefüllte Reifen ausgebildet sind.

Fig. 1

**Fig. 3**

**Fig. 2**

**Fig. 5**

**Fig. 4**

Fig. 7

Fig. 6

Fig. 9

Fig. 8

0 164 057

*Fig. 10*

0 164 057

Fig. 12

Fig. 11